(19) Europäisches Patentamt
European Patent Office
Office européen des brevets

(11) Publication number: **0 133 031**
**B1**

(12) # EUROPEAN PATENT SPECIFICATION

(45) Date of publication of patent specification: **06.07.88**

(51) Int. Cl.$^4$: **C 10 G 45/08,** B 01 J 27/049

(21) Application number: **84305106.1**

(22) Date of filing: **26.07.84**

(54) **Bulk and supported, self-promoted molybdenum and tungsten sulfide catalysts formed from bis(tetrathiometallate) precursors and their preparation and use for hydrotreating.**

(30) Priority: **29.07.83 US 518360**
**29.07.83 US 518361**
**29.07.83 US 518363**

(43) Date of publication of application:
**13.02.85 Bulletin 85/07**

(45) Publication of the grant of the patent:
**06.07.88 Bulletin 88/27**

(84) Designated Contracting States:
**DE FR GB IT NL**

(56) References cited:
**GB-A-2 055 603**
**US-A-3 965 041**
**US-A-4 368 115**

(73) Proprietor: **Exxon Research and Engineering Company**
**P.O.Box 390 180 Park Avenue**
**Florham Park New Jersey 07932 (US)**

(72) Inventor: **Chianelli, Russell Robert**
**151 Station Road**
**Somerville New Jersey 08876 (US)**
Inventor: **Ho, Teh Chung**
**887 Jason Court**
**Bridgewater New Jersey 08807 (US)**
Inventor: **Pan, Wie-Hin**
**5431 Bridle Path**
**Columbia, Maryland 21044 (US)**
Inventor: **Stiefel, Edward Ira**
**3 Glen Eagles Drive**
**Bridgewater New Jersey 08807 (US)**

(74) Representative: **Somers, Harold Arnold et al**
**ESSO Engineering (Europe) Ltd.**
**Patents & Licences**
**Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 133 031 B1**

**Description**

This invention relates to the preparation of bulk and supported, self-promoted molybdenum sulfide catalysts, the bulk and supported species prepared by such processes, and to the use of such bulk and supported catalysts for hydroprocessing processes, particularly hydrotreating. More particularly, this invention relates to the preparation and use of bulk and supported catalysts useful for hydroprocessing processes such as hydrotreating wherein said catalysts are formed by heating a composite of a support and one or more molybdenum and/or tungsten bis(tetrathiometallate) catalyst precursor compounds containing the promoter metal as part of the precursor molecule in the presence of sulfur at elevated temperature for a time sufficient to form said self-promoted catalysts.

The petroleum industry is increasingly turning to coal, tar sands, heavy crudes and resids as sources for future feedstocks. Feedstocks derived from these heavy materials contain more sulfur and nitrogen than feedstocks derived from more conventional crude oils. Such feedstocks are commonly referred to as being dirty feeds. These feeds therefore require a considerable amount of upgrading in order to obtain usable products therefrom, such upgrading or refining generally being accomplished by hydrotreating processes which are well-known in the petroleum industry.

These processes require the treating with hydrogen of various hydrocarbon fractions, or whole heavy feeds, or feedstocks, in the presence of hydrotreating catalysts to effect conversion of at least a portion of the feeds, or feedstocks to lower molecular weight hydrocarbons, or to effect the removal of unwanted components, or compounds, or their conversion to innocuous or less undesirable compounds. Hydrotreating may be applied to a variety of feedstocks, e.g., solvents, light, middle, or heavy distillate feeds and residual feeds, or fuels. In hydrorefining relatively light feeds, the feeds are treated with hydrogen, often to improve odor, color, stability, combustion characteristics, and the like. Unsaturated hydrocarbons are hydrogenated, and saturated. Sulfur and nitrogen are removed in such treatments. In the treatment of catalystic cracking feedstocks, the cracking quality of the feedstock is improved by the hydrotreating. Carbon yield is reduced, and gasoline yield is generally increased. In the hydrodesulfurization of heavier feedstocks, or residua, the sulfur compounds are hydrogenated and cracked. Carbon-sulfur bonds are broken, and the sulfur for the most part is converted to hydrogen sulfide which is removed as a gas from the process. Hydrodenitrogenation, to some degree, also generally accompanies hydrodesulfurization reactions. In the hydrodenitrogenation of heavier feedstocks, or residue, the nitrogen compounds are hydrogenated and cracked. Carbon-nitrogen bonds are broken, and the nitrogen is converted to ammonia and evolved from the process. Hydrodesulfurization, to some degree, also generally accompanies hydrodenitrogenation reactions. In the hydrodesulfurization of relatively heavy feedstocks, emphasis is on the removal of sulfur from the feedstock. In the hydrodenitrogenation of relatively heavy feedstocks, emphasis is on the removal of nitrogen from the feedstock. Although hydrodesulfurization and hydrodenitrogenation reactions generally occur together, it is usually far more difficult to achieve effective hydrodenitrogenation of feedstocks than hydrodesulfurization of feedstocks.

Catalysts most commonly used for these hydrotreating reactions include materials such as cobalt molybdate on alumina, nickel on alumina, coblt molybdate promoted with nickel, nickel tungstate, etc. Also, it is well-known to those skilled in the art to use certain transition metal sulfides such as cobalt and molybdenum sulfides and mixtures thereof to upgrade oils containing sulfur and nitrogen compounds by catalytically removing such compounds in the presence of hydrogen, which processes are collectively known as hydrotreating or hydrorefining processes, it being understood that hydrorefining also includes some hydrogenation of aromatic and unsaturated aliphatic hydrocarbons. Thus, US—A—914,462 discloses the use of molybdenum sulfide for hydrodesulfurizing gas oil and US—A—3,148,135 discloses the use of molybdenum sulfide for hydrorefining sulfur and nitrogen-containing hydrocarbon oils. US—A—2,715,603 discloses the use of molybdenum sulfide as a catalyst for the hydrogenation of heavy oils, while US—A—3,074,783 discloses the use of molybdenum sulfides for producing sulfur-free hydrogen and carbon dioxide, wherein the molybdenum sulfide converts carbonyl sulfide to hydrogen sulfide. Molybdenum and tungsten sulfides have other uses as catalysts, including hydrogenation, methanation, water gas shift, etc., reactions.

In general, with molybdenum and other transition metal sulfide catalysts as well as with other types of catalysts, higher catalyst surface areas generally result in more active catalysts than similar catalysts with lower surface areas. Thus, those skilled in the art are constantly trying to achieve catalysts that have higher surface areas. More recently, it has been disclosed in US—A—4,243,553 and US—A—4,243,554 that molybdenum sulfide catalysts of relatively high surface area may be obtained by thermally decomposing selected thiomolybdate salts at temperatures ranging from 300—800°C in the presence of essentially inert, oxygen-free atmospheres. Suitable atmospheres are disclosed as consisting of argon, a vacuum, nitrogen and hydrogen. In US—A—4,243,554 an ammonium thiomolybdate salt is decomposed at a rate in excess of 15°C per minute, whereas in US—A—4,243,553 a substituted ammonium thiomolybdate salt is thermally decomposed at a very slow heating rate of from about 0.5 to 2°C/min. The processes disclosed in these patents are claimed to produce molybdenum disulfide catalysts having superior properties for water gas shift and methanation reactions and for catalyzed hydrogenation or hydrotreating reactions.

Catalysts comprising molybdenum sulfide in combination with other metal sulfides are also known.

Thus, US—A—2,891,003 discloses an iron-chromium combination for desulfurizing olefinic gasoline fractions; US—A—3,116,234 discloses Cr—Mo and also Mo with Fe and/or Cr and/or Ni for HDS; US—A—3,265,615 discloses Cr—Mo for HDN and HDS; US—A—3,245,903 discloses Fe—Mo and FE—Co—Mo for lube oil refining; US—A—3,459,656 discloses Ni—Co—Mo for HDS; US—A—4,108,761 discloses Fe—Ni—Mo for HDN and US—A—4,171,258 discloses Fe—Cr—Mo for HDS with steam.

US—A—4368115 describes processes for the catalytic treatment of hydrocarbon feedstreams containing organic sulfur comprising contacting said feedstream with a catalyst for a time at a temperature and pressure sufficient to effect the desired catalytic change on the feedstream, wherein the catalyst is a layered composition of the formula $MX_y$ wherein M is a transition metal selected from the group consisting of Group IVb, Vb, VIb, VIIb and uranium, X is a chalcogen selected from the group consisting of sulfur, selenium, tellurium, and mixtures thereof, y is a number ranging from 1.5 to about 3. The catalyst is prepared by reacting neat or in the presence of a nonaqueous solvent a Group IVb to VIIb or uranium metal salt, and a source of sulfide, selenide or telluride ions, and mixing the reactants at temperatures below 400°C and at atmospheric pressures. The catalyst may be isolated by filtration and washing with excess solvent (when one is used) or by vacuum pumping any volatile coproduced anion salt. Preferably the chalcogenide is sulfur and y is about 1.5 to about 2.

The catalytic treatment processes are hydrodesulfurization, hydrodenitrogenation, hydroconversion and hydrogenation effected in the presence of hydrogen or a hydrogen donor solvent.

The present invention relates to hydroprocessing processes and catalysts useful therefor, said processes comprising contacting a hydrocarbon feed, at elevated temperature and in the presence of hydrogen, with a supported or nonsupported, self-promoted catalyst obtained by heating one or more carbon-containing, bis(tetrathiometallate) precursor salts selected from the group $(NR_4)_2[M(WS_4)_2]$, $(NR_4)_x[M(MoS_4)_2]$ and mixtures thereof, said catalyst being either bulk or composited with a porous, inorganic refractory oxide support material, in a non-oxidizing atmosphere in the presence of sulfur and hydrogen at a temperature above about 150°C for a time sufficient to form said catalyst, wherein $(NR_4)$ is a carbon-containing, substituted ammonium cation and R is selected from (a) alkyl groups, aryl groups or a mixture thereof and (b) mixtures of (a) with hydrogen, wherein promoter metal M is covalently bound in the anion and is Ni, Co or Fe and wherein x is 2 if M is Ni and x is 3 if M is Co or Fe. In a preferred embodiment, substituted ammonium cation $(NR_4)$ will contain only alkyl groups and, for the supported species, the support will comprise alumina. It is also preferred to form the catalyst in the presence of a hydrocarbon. Self-promoted means a promoted catalyst formed from a precursor of this invention wherein the promoter metal is covalently bound in the anion of the precursor salt as explained below.

Hydroprocessing processes is meant to include any process that is carried out in the presence of hydrogen including, but not limited to, hydrocracking, hydrodenitrogenation, hydrodesulfurization, hydrogenation of aromatic and aliphatic unsaturated hydrocarbons, methanation, water gas shift, etc. These reactions include hydrotreating and hydrorefining reactions, the difference generally being thought of as more of a difference in degree than in kind, with hydrotreating conditions being more severe than hydrorefining conditions. Such hydroprocessing (e.g., removing nitrogen from a nitrogen-containing hydrocarbon feed or upgrading a hydrocarbon feed) is effected by contacting the feed with a supported or nonsupported catalyst of the invention in the presence of hydrogen at a temperature of at least 100°C.

The precise nature and composition of the catalyst species that is formed as a result of heating up a composite of precursor salt and support or precursor salt in the absence of a support or precursor salt in the absence of a support material in the presence of sulfur and hydrogen is not known. The surface composition or composition deposited on the surface of the support is believed to correspond generally with the unsupported catalyst species. The unsupported, bulk catalysts differ from the supported, self-promoted catalyst species in that the supported catalyst species achieve superior utilization of the catalytic metals present on the catalyst.

The bulk and supported catalyst species of this invention are stable, highly active and selective as hydrotreating catalysts.

In one method of preparing the supported catalyst species of this invention, a solution of precursor salt or a mixture of salts, is incorporated with a pre-selected quantity of porous, refractory inorganic oxide support material, preferably a particulate mass of said support, with the salt-containing support then dried to remove all or a portion of the solvent from the support, and the dried, particulate, salt-containing support then heated in a non-oxidizing atmosphere in the presence of sulfur or sulfur-bearing compound and hydrogen at elevated temperature to form the catalyst species of this invention. Suitably, sufficient amounts of the salt, or salts, are incorporated on the support so that prior to, or at the time that the composition of support and precursor salt or salts is heated in the presence of sulfur and hydrogen, preferably from 10 weight percent to 25 weight percent of the salt, expressed as weight of $MoO_3$ or $WO_3$ on an ignition loss free basis, will be present on the support.

The precursor salt or mixture of salts is composited or otherwise intimately associated with the porous, inorganic oxide support by various techniques well-known to those skilled in the art, such as coprecipitation, impregnation or the like. The composite is preferably formed from a solution of the desired precursor salt, or salts by impregnation of the support, typically via an "incipient wetness" technique which requires a minimum of solution so that the total solution with the pre-selected desired amount of the catalyst precursor salt is adsorbed, initially or after some evaporation. Alternatively, in some cases it may

be found that the precursor salts useful for forming the supported catalyst species of this invention have limited solubility in both non-aqueous and mixed aqueous/non-aqueous media so that multiple impregnation of the support material with the precursor salt solution is necessary. In this case, it will be necessary to dry most or at least a major portion of the solvent between each impregnation. In any event, the precursor salt-containing particulate material can thereafter be heated and dried at low temperature, with or without vacuum assistance, e.g., at temperatures ranging at or below the boiling temperature of the solvent. Typically, a particulate porous refractory inorganic oxide, notably alumina, in the form of beads, pills, pellets, sieved particles, extrudates, or the like in dry or solvated state is contacted with a solution of the precursor salt or mixture of precursor salts with the result that the salt solution is adsorbed into the particulate material in the desired amount. Alternatively, a supported catalyst species of this invention has been formed by forming the precursor salt in the presence of a slurry of support material.

The preferred support for the catalyst species of this invention is alumina, and the composite support can contain for example, one or more of alumina, bentonite, clay, diatomaceous earth, zeolite, silica, activated carbon, magnesia, zirconia, boria, titania and the like, these latter with alumina, usually in a range of from about 1 to 20 weight percent, based on the weight of the support. A preferred support for the practice of the present invention is one having a surface area of more than 50 $m^2/g$, preferably from about 100 to about 300 $m^2/g$.

As hereinbefore stated, the catalyst precursor salt will be one or more carbon containing bis(tetrathiomolybdate) or bis(tetrathiotungstate) anion compounds of the formula $(NR_4)_2[M(WS_4)_2]$ or $(NR_4)_x[M(MoS_4)_2]$ wherein the promoter metal M is covalently bound in the anion and is Ni, Co or Fe and wherein x is 2 if M is Ni and x is 3 if M is Co or Fe. As hereinbefore stated, R is a proton, an alkyl group, an aryl group or mixture thereof and preferably one or more alkyl groups. These bis(tetrathiometallate) anions have the structure

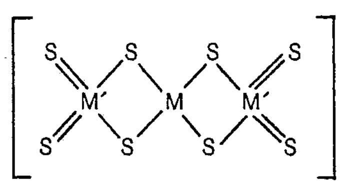

2−, 3−

wherein M′ is either Mo or W, and the promoter metal M is tetracoordinated with four sulfur atoms with each of the two tetrathiometallate groups providing two of the said four sulfur atoms. Thus, it will be appreciated that the charge, 2− or 3−, on the bis(tetrathiometallate) anion will depend on the charge or oxidation state of the promoter metal M. The bis(tetrathiotungstate) and bis(tetrathiomolybdate) anions, $[M(WS_4)_2]$ and $[M(MoS_4)_2]$, will have a charge of 2− when the oxidation state of the promoter metal M is 2+. In contrast, they will have a charge of 3− if the oxidation state of promoter metal is 1+.

The precorsor salts useful in this invention may be prepared in both non-aqueous media and mixed aqueous/non-aqueous media. With the exception of compounds containing the cobalt bis(tetrathiomolybdate) trianion, many compounds useful as catalyst precursors in this invention and the methods used to prepare them may be found in an article by Callahan and Piliero titled "Complexes of $d^8$ Metals with Tetrathiomolybdate and Tetrathiotungstate Ions. Synthesis, Spectroscopy and Electrochemistry," Inorg. Chem., *19*, n.9, 2619—2629 (1980) and in a review article by A. Muller et al in Chem. Rev. *104*, 975 (1971), the disclosures of which are incorporated herein by reference.

Except for compounds containing the cobalt bis(tetrathiomolybdate) anion, compounds useful as catalyst precursor salts in the practice of this invention may be prepared, for example, in mixed aqueous/non-aqueous media such as an equal volume mixture of water and acetonitrile. Thus, one may form separate solutions of a simple salt of the promoter metal (i.e., a halide, sulfate, etc.) and an ammonium thiotungstate or thiomolybdate in the mixed media. These solutions will then be mixed, preferably at relatively low temperature and under anaerobic conditions. A salt of a suitable cation (i.e., $NR_4Cl$) may be added to the promoter salt solution or to the mixture of promoter metal salt and ammonium thiometallate. The catalyst precursor $(NR_4)_x[M(M'S_4)_2]$ precipitates out of solution. The catalyst precursor compounds useful in this invention are stable in the presence of oxygen or air if they are kept dry, except for the $(NR_4)_3[Fe(MoS_4)_2]$ and $(NR_4)_3[Co(MoS_4)_2]$ precursor compounds which should be kept both dry and under anaerobic conditions.

Compounds of the formula $(NR_4)_3[Co(MoS_4)_2]$ containing the cobalt bis(tetrathiomolybdate) trianion $[Co(MoS_4)_2]^{3-}$ of the structure set forth above wherein the cobalt is in the 1+ oxidation state have been prepared in non-aqueous media using mono, di and trivalent cobalt containing compounds. If the cobalt in the cobalt containing starting material is in the monovalent or 1+ oxidation state, a reducing agent need not be present in the reaction media. However, a non-oxidizing environment is essential to form the trianion in significant amounts irrespective of whether the cobalt in the starting material is in the mono, di or trivalent state. These compounds are preferably formed under anaerobic conditions. Illustrative, but non-limiting examples of monovalent cobalt starting materials useful for forming compounds containing the trianion $[Co(MoS_4)_2]^{3-}$ include cyclopentadieneyl cobalt dicarbonyl — $(C_5H_5]Co(CO)_2$, hydridocobalt tetracarbonyl — $HCo(CO)_4$ and cyclopentadienyl cobalt cycloctatetetraene — $(C_5H_5)Co(C_8H_8)$.

When using a cobalt containing starting material wherein the cobalt is di or trivalent, it is necessary for the cobalt to be converted to the monovalent form during the reaction in order for the product to be formed. The conversion into the monovalent cobalt form can be effected by the presence of sufficient reducing agent in the reaction medium. The reducing agent may be added to the reaction medium or it may be part of the cobalt containing compound used as one of the starting materials.

When a compound containing a divalent or trivalent cobalt atom is used as a starting material, it is necessary for the cobalt to be converted to the monovalent form during the formation of the bis(tetrathiomolybdate) trianion. The following reaction sequence illustrates the formation of $(NR_4)_3[Co(MOS_4)_2]$ from $CoCl_2$ and $(NR_4)_3(MoS_4)$ in the presence of a reducing agent such as an organic thiolate, $SR^-$, wherein R is hydrogen, an alkyl, an aryl group, or mixture thereof and preferably an alkyl group.

$$CoCl_2 + 4RSH + 4NR_3 \xrightarrow{CH_3CN} (NR_3H)_2Co(SR)_4 + 2(NR_3H)Cl \quad (1)$$

$$(NR_3H)_2Co(SR)_4 + 2(NR_4)_2(MoS_4) \xrightarrow{CH_3CN} (NR_4)_3[Co(MoS_4)_2] + 1/2\ RSSR + 2(NR_3H)SR + (NR_4)SR \quad (2)$$

Thus when the simple salt $CoCl_2$, where the cobalt is divalent, is used as a starting material, it is first reacted with a thiolate reagent, $SR^-$, to form the anion $Co(SR)_4^{2-}$. The thiolate reagent $SR^-$ is generated by reacting the thiol RSH with a base. Although any base may be used, such as NaOH, it is preferred to use a nitrogen containing organic base such as pyridine, or a primary, secondary or tertiary amine. In equation (1) above, the base is a trialkylamine. Although only a stoichiometric amount of reducing agent $SR^-$ is needed to effect the reduction from $Co^{2+}$ to $Co^{1+}$, it is preferred to use an excess of reducing agent. The solution containing the anion $Co(SR)_4^{2-}$ is then added to the $(NR_4)_2MoS_4$, partially dissolved in $CH_3CN$ (eq. 2). After a period of 30 to 60 minutes, the reaction is complete. Since the product $(NR_4)_3[Co(MoS_4)_2]$ is the least soluble in the reaction mixture, it can be readily precipitated out of the solution by adding diethylether to the reaction mixture.

When the cobalt starting material already contains the reducing agent bonded to it, for example $Co(S_2CNR'_2)_3$, it can be directly reacted with $(NH_4)_2MoS_4$. Equation 3 illustrates this reaction wherein R′ is alkyl, aryl or mixture thereof and preferably alkyl.

$$Co(S_2CNR'_2)_3 + 2(NH_4)_2MoS_4 \xrightarrow[70°C;\ 10—20\ hrs.]{DMF} \quad (3)$$

$$(NH_4)_3[Co(MoS_4)_2] + (S_2CNR'_2)_2 + (NH_4)S_2CNR'_2$$

In this example, the cobalt starting material has cobalt in the trivalent state. Three equivalents of the reducing agent, N,N-dialkyl dithiocarbamate, $S_2CNR'_2{}^-$, are coordinated with the $Co^{3+}$. In this reaction, N,N-dimethylformamide is the preferred solvent. Further, this reaction requires heating at 70°C and at least 10 hours for the reaction to give significant yield of the product. The reducing agent gets oxidized to tetraalkylthiuramdisulfide $(S_2CNR'_2)_2$ as the $Co^{3+}$ gets converted to $Co^1$. Examples of other reducing agents that are capable of coordinating with cobalt include alkyl or aryl xanthates $(S_2COR'^-)$, o,o-dialkyldithiophosphates $(S_2P(OR')_2{}^-)$, dialkyldithiophosphinates $(S_2PR'_2{}^-)$ or thiolates $(SR'^-)$.

It should be understood that other reducing agents such as dithionite salts, borohydride salts, hydrazines, etc., can be used as the reductant in this synthesis route when other cobalt 2+ or 3+ compounds or complexes are used as the cobalt starting material. These include complex ions in which N, O, S or P are coordinated to the cobalt atom. Illustrative, but non-limiting examples of other suitable cobalt 2+ and 3+ compounds and complexes include salts of $Co(ammine)_6^{2+,3+}$, $Co(acetylacetonate)_3$, salts of $[Co(NH_3)_5Cl]^{2+}$, etc.

The cobalt bis(tetrathiomolybdate) trianion compounds prepared as above were analyzed using a variety of analytical techniques. Thus, elemental analysis was done by using combustion analysis for carbon, nitrogen, hydrogen and sulfur while atomic absorption spectroscopy was used to analyze for the metals. Infrared and electronic absorption spectroscopy were also employed as well as magnetic susceptibility and x-ray powder diffraction spectroscopy. In the infra-red region, characteristic bands of the trianion of this invention, $Co(MoS_4)_2^{3-}$, were observed at 481 $cm^{-1}$, 466 $cm^{-1}$ and at 445 $cm^{-1}$. In the ultraviolet-visible-near infra-red region, a N,N-dimethylformamide solution of the $(NR_4)^+$ salt (wherein R was $C_2H_5$) displayed peaks at 825 nm (400), 645 nm (6,600), 545 nm (5,300), 453 nm (sh) and at 394 nm (19,500). The parenthetical numbers are molecular extinction coefficients in units of liter $mole^{-1}$ $cm^{-1}$. The complex $(NR_4)[Co(MoS_4)_2]$ wherein $R=C_2H_5$ displayed a magnetic moment of 3.3 BM as determined by the Evans NMR method.

Inasmuch as compounds containing the cobalt bis(tetrathiomolybdate) trianion are sensitive to oxygen, they must be maintained under non-oxidizing and preferably anaerobic conditions.

The catalysts of this invention may be prepared by heating a composite of one or more catalyst precursor salts and support material or one or more precursor salts in the absence of a support material, in the presence of sulfur and hydrogen and at a temperature of from about 150—600°C, for a time sufficient to form the catalyst. Preferably, the temperature will range from about 200—500°C and more preferably from about 300—400°C. In a preferred embodiment the catalyst will be formed in the presence of a hydrocarbon, in addition to sulfur and hydrogen.

The sulfur required for the formation of the catalyst from the composite of the precursor salt and support should be present in an amount at least suficient to achieve the desired stoichiometry of the resulting catalyst. It should be noted that it is possible to make catalysts useful in the process of this invention using only the sulfur present in the precursor. However, it is preferred that additional sulfur be present during formation of the catalyst. This additional sulfur may be present as elemental sulfur or a sulfur-bearing compound other than the precursor. Preferably, sulfur will be present in the reaction zone in an amount in excess of the stoichiometrically required amount. The hydrogen required to form the catalyst may be present in the reaction as gaseous hydrogen, a hydrogen-bearing gas such as $H_2S$, one or more hydrogen donor hydrocarbons such as tetralin, or combination thereof.

In a preferred embodiment, the catalysts of this invention will be formed ex-situ or in situ in the presence of any hydrocarbon that is convenient, including a heavy hydrocarbon oil having at least 10 weight percent of material boiling above about 1050°F (565.6°C) at atmospheric pressure, such as various residua, whole and topped crude oils, etc. Thus, the catalysts of this invention may be formed in situ in a sulfur-bearing feed merely by contacting one or more suitable precursor compounds useful in forming the catalysts of this invention with the feed and hydrogen at a temperature above about 150°C and preferably above about 200°C. After the catalyst has been formed in-situ, the catalyst will then act to remove sulfur from said feed if hydrogen is present therein. As previously stated, the hydrogen may be present in the feed as gaseous hydrogen, a hydrogen-bearing gas such as $H_2S$, one or more hydrogen donor hydrocarbons such as tetralin, or combination thereof.

As discussed above molybdenum and tungsten sulfide catalysts both bulk and supported, have many uses, including hydrotreating. Hydrotreating condition vary considerably depending on the nature of the hydrocarbon being hydrogenated, the nature of the impurities or contaminants to be reacted or removed, and, inter alia, the extent of conversion desired, if any. In general however, the following are typical conditions for hydrotreating a naphtha boiling within a range of from about 25°C to 210°C, a diesel fuel boiling within a range of from about 170°C to 350°C, a heavy gas oil boiling within a range of from 325°C to 475°C, a lube oil feed boiling within a range of from about 290—550°C, or residuum containing from 10 percent to 50 percent of material boiling above about 575°C.

Finally, the catalysts of this invention are also useful for removing nitrogen from nitrogen-containing feedstocks. They are particularly useful for selectively removing nitrogen from a nitrogen and sulfur containing feed, such as a lube oil feed.

TABLE 1

| Feed | | Temp., °C | Gauge pressure psig | (kPa) | Space Velocity V/V/Hr | Hydrogen Gas Rate SCF/B | ($lH_2$/l feed) |
|---|---|---|---|---|---|---|---|
| Naphtha | Typical | 100—370 | 150—800 | (1034—5516) | 0.5—10 | 100—2000 | (17.1—341.9) |
| Diesel Fuel | Typical | 200—400 | 250—1500 | (1724—10343) | 0.5—4 | 500—6000 | (85.5—1025.7) |
| Heavy Gas Oil | Typical | 260—430 | 250—2500 | (1724—17238) | 0.3—2 | 1000—6000 | (170.9—1025.7) |
| Lube Oil | Typical | 200—450 | 100—3000 | (690—20685) | 0.2—5 | 100—10,000 | (17.1—1709.4) |
| Residuum | Typical | 340—450 | 1000—5000 | (6895—34475) | 0.1—1 | 2000—10,000 | (341.9—1709.4) |

The invention will be more readily understood by reference to the following examples.

## Examples

In the following examples, supported catalyst species were prepared and were ground and pelletized to a 20/40 mesh size (Tyler) using a four percent aqueous solution of polyvinyl alcohol as a binder. The pelletized catalyst precursors were placed into a stainless steel reactor at 100°C at atmospheric pressure where they were purged for one hour under nitrogen. Ten percent of hydrogen sulfide in hydrogen was introduced into the reactor at a space velocity of 0.75 SCF/hr (21.24 l/h) for each 10cc of catalyst in the reactor. The temperature in the reactor was then raised to 325°C and kept at this temperature for three hours to form the catalyst after which the temperature in the reactor was lowered to 100°C, the $H_2S/H_2$ gas flow was stopped and the reactor was purged with nitrogen until room temperature was reached.

About 20cc of each catalyst was loaded into a fixed-bed reactor made out of ⅜ inch (9.53 mm) 316 stainless steel pipe which was equipped with a calibrated feed burette pump, gas-liquid separator and liquid product collector. The conditions in the reactor were as set forth below:

| | |
|---|---|
| Temperature | 325°C |
| Pressure | 3.15 MPa |
| Hydrogen rate | 3000 SCF/bbl (534.4 $lH_2$/l feed) |
| LHSV | 3.0 |

The liquid product was analyzed for total sulfur by X-ray fluorescence and for nitrogen by combustion analysis. The feedstock used was a light catalytic cycle oil (LCCO) that was about 20 wt.% paraffinic having properties set forth in Table 2.

TABLE 2

| | LCCO Feed |
|---|---|
| Gravity (°API) | 18.6 |
| Sulfur, wt. % | 1.5 |
| Nitrogen, ppm | 370 |

GC distillation

| Wt. % | Temp., °C |
|---|---|
| 5 | 231 |
| 10 | 251 |
| 50 | 293 |
| 70 | 321 |
| 90 | 352 |
| 95 | 364 |

Hydrodesulfurization ($K_{HDS}$) and hydrodenitrogenitrogenation ($K_{HDN}$) rate constants for the respective reactions were calculated as follows:

$$K_{HDS} = \frac{LHSV}{S_f}\left(\frac{S_f}{S_p} - 1\right)$$

$$K_{HDN} = \left(LHSV\right) \ln\left(\frac{N_f}{N_p}\right)$$

wherein $S_f$ and $S_p$ are the weight percent of sulfur in the feed and product, respectively and $N_f$ and $N_p$ are the weight percent of nitrogen in the feed and product, respectively.

Example 1

In this experiment ten grams of a $[N(C_3H_7)_4]_2$—$Ni(MoS_4)_2$ precursor salt were impregnated onto 20 grams of a reforming grade of gamma alumina obtained from Norton. Impregnation was done using the porefilling method. The precursor salt was dissolved in DMF and a total of four impregnations were used. First impregnation, 4.6 grams of the nickel molybdate was dissolved in 11.5 ml of DMF with this solution added dropwise to the alumina support. After each addition the resulting impregnate was dried in a vacuum oven overnight at about 50°C. The resulting impregnate was pelletized using the procedure set forth above and placed into the reactor to form the catalyst and then used to hydrotreat the light catalytic cycle oil feed. The results are set forth in the Table.

Example 2

In this experiment 106 grams of colloidal alumina (20 weight percent alumina from Nyacol) was placed in a four neck flask and degassed with nitrogen. A mechanical stirrer was fitted in the middle neck and nitrogen was admitted in one of the side necks. The other two necks were fitted with addition funnels one of which contained 5.42 grams of ammonium thiomolybdate dissolved in 150 ml of $H_2O$ and the other contained 6.7 g of $[N(C_3H_7)_4]$ Br and 2.4 g of $NiCl_2 \cdot 6H_2O$ in a mixture of 50 ml $H_2O$ and 35 ml $CH_3CN$. Both solutions were degassed with nitrogen.

Both solutions were simultaneously added to the colloidal alumina in the flask accompanied by vigorous stirring. The red color of the $[N(C_3H_7)_4]_2Ni(MoS_4)_2$ precursor salt formed and the colloid gradually gelled. The stirring rate was increased and as more of the reactant solutions were added the gel became liquid again. After addition of the reactants was complete, an opaque product having a red color was obtained. This product was dried in a vacuum oven at 53°C for two days yielding a solid composite of precursor salt and alumina.

The dry composite was pelletized, etc. as above and placed in the reactor to form the supported catalyst species which was then used to hydrotreat the light catalytic cycle oil feed. The results are set forth in the Table.

Example 3

In this experiment, two commercial HDS and HDN catalysts were sulfided and placed in the reactor to hydrotreat the LCCO feed. The catalysts comprised cobalt molybdate on —$Al_2O_3$ and nickel molybdate on —$Al_2O_3$. The cobalt molybdate catalyst comprised 12.5 percent molybdenum oxide and 3.5 percent cobalt oxide supported on the gamma alumina and the nickel molybdate comprised 18 percent molybdenum oxide and 3.5 percent nickel oxide on gamma alumina. These commercial catalysts were sulfided employing the same procedure used to form the catalysts of this invention, except that the temperature was 360°C for one hour. The results are shown in the Table.

TABLE 3

HDA and HDN Activities of Catalysts

| Catalyst | $K_{HDN}$ | $K_{HDS}$ | HDN Selectivity* |
|---|---|---|---|
| Example 1 | 0.86 | 6.0 | 14.2 |
| Example 2 | 0.61 | 4.6 | 13.2 |
| Cobalt molybdate on alumina (Example 3) | 0.55 | 10.7 | 5.14 |
| Nickel molybdate on alumina (Example 3) | 1.26 | 10.1 | 12.48 |

*HDN selectivity is defined as $\frac{K_{HDN}}{K_{HDS}} \times 100$

Example 4

1.3 ml of $HSC_6H_5$ and 1.75 ml of $N(C_2H_5)_3$ were added to a suspension of 0.669 g of $CoCl_2$ in $CH_3CN$. The resulting green solution was added to a suspension of 4.9 g of $[N(C_2H_5)_4]_2MoS_4$ in $CH_3CN$. The mixture was stirred and a dark green solution gradually resulted. Within 30 minutes, the reaction was completed and the solution was filtered. The product, $[N(C_2H_5)_4]_3[Co(MoS_4)_2]$ was precipitated by adding diethylether to the filtrate. The precipitated product was filtered, washed with diethylether, methanol and diethylether again. One gram of this catalyst precursor was pressed under 15,000—20,000 psi (103,425 to 137,900 kPa) and then sieved through 10/20 mesh or 20/40 mesh sieves. One gram of this meshed catalyst precursor was mixed with 10 g of 1/16 in. (1.6 mm) spheroid porcelain beads and placed in the catalyst basket of a Carberry-type autoclave reactor. The remainder of the basket was filled with more beads. The reactor was designed to allow a constant flow of hydrogen through the feed and to permit liquid sampling during operation.

After the catalyst precursor and beads were charged to the reactor, the reactor system was flushed with helium for about 30 minutes after which hydrogen flow through the reactor was initiated at a rate of 100 cc/min. After the hydrogen began flowing through the reactor, the reactor was charged with 100 cc of a feed comprising a DBT/Decalin mixture which was prepared by dissolving 4.4 g of dibenzothiophene (DBT) in 100 cc of hot Decalin. The solution thus contained about 5 wt.% DBT or 0.8 wt.% S. The hot feed solution was filtered and 1 cc of decane was added.

After the feed was charged to the reactor, the hydrogen (gauge) pressure was increased to about 450 psig (3103 kPa) and the temperature in the reactor raised from room temperature to about 350°C over a period of about ½ hour during which time the catalyst was formed in-situ in the reactor. The hydrogen flow rate through the reactor was maintained at about 100 cc per minute. When the desired temperature and pressure were reached, a GC sample of liquid was taken and additional samples taken at one hour intervals thereafter. The liquid samples from the reactor were analyzed using a Gow Mac Series 550 Gas Chromatograph.

As the reaction progressed, samples of liquid were withdrawn once an hour and analyzed by GC chromatography in order to determine the activity of the catalyst towards hydrodesulfurization as well as its selectivity for hydrogenation. The hydrodesulfurization activity was determined according to the following model reaction:

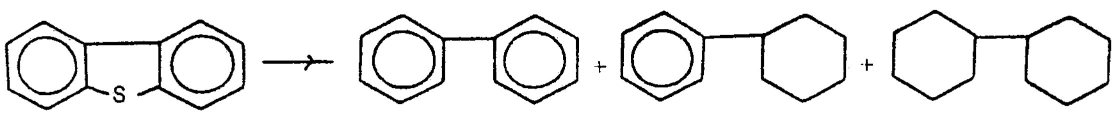

DBT dibenzethiophene

BP biphenyl

CHB cyclohexyl benzene

BC bicyclohexyl $+ H_2S$

The hydrodesulfurization zero order rate cosntant, r, for the catalyst was found to be 370 × $10^{16}$ molecules of DBT desulfurized per gram of $MoS_2$ in the catalyst per second as shown in the Table. This rate is significantly higher than that of a catalyst formed from $(NH_4)_2MoS_4$ and tested in a similar manner which has a rate constant, r, of 45 × $10^{16}$.

Example 5

The Co complex, $[N(C_2H_5)_4]_2[Co(WS_4)_2]$, was prepared in a manner similar to that described by Callahan and Piliero for the preparation of $Ni(WS_4)_2^{2-}$. Thus $CoCl_2 \cdot 6H_2O$ (1.54 g) in a mixture of 40 ml water and 40 ml $CH_3CN$ was acidified with about 4 ml glacial acetic acid. This solution was deaerated with argon gas for about 5—10 mins. after which it was added, dropwise, to a similarly deaerated, stirred solution of 4.34 g $(NH_4)_2WS_4$ in 160 ml of a 1:1 mixture of $CH_3CN/H_2O$. A black solution formed. After addition was completed, 6 g. $[N(C_2H_5)_4]Br$ in 60 ml of a 1:1 mixture of $CH_3CN/H_2O$ (deaerated with argon) was added to the black solution. A brown crystalline precipitate of $[N(C_2H_5)_4]_2[Co(WS_4)_2]$ formed. After stirring for 30 minutes at 0°C, the product, $[N(C_2H_5)_4]_2[Co(WS_4)_2]$, was filtered under argon, washed with water, then methanol followed by diethyl ether and air dried. The yield was 5.3 g (89%).

A catalyst was formed in-situ and its activity was measured using the same procedure described in Example 1. The resulting in-situ formed catalyst had a rate constant of 167 × $10^{16}$ molecules of DBT converted/sec.-gm of $WS_2$ as shown in the Table. This example shows that compounds containing the bis(tetrathiotungstate) dianion are useful precursors for forming the catalysts of this invention.

Example 6

A nickel self-promoted catalyst precursor, $[N(C_3H_7)_4]_2[Ni(MoS_4)_2]$, was prepared using known literature methods in an analogous fashion to Example 2. Thus, $(NH_4)_2MoS_4$ (15.3 g) was partially dissolved in 180 ml of a 1:1 (by volume) mixture of water and $CH_3CN$. The solvent mixture was previously deaerated with argon gas for a period of about 10 minutes. To the above stirred solution was added slowly a deaerated solution mixture of $NiCl_2 \cdot 6H_2O$ (6.75 g) and $[N(C_3H_7)_4]Br$ in 180 ml of a 1:1 (by volume) mixture of water and $CH_3CN$. The reaction mixture was cooled to 0°C in an ice bath. The red catalyst precursor product was filtered in air, washed with methanol and ether, then dried under vacuum for several hours. The yield was practically quantitative. The precursor was sieved, etc. and a catalyst formed in-situ using the procedure in Example 1.

The activity of the resulting catalyst was found to be 239 × $10^{16}$ molecules of DBT converted/sec.-gm of $MoS_2$ as shown in the Table.

Example 7

A $[N(C_2H_5)_4]_2[Ni(MoS_4)_2]$ catalyst precursor was prepared using the same procedure in Example 3, excep that $[N(C_2H_5)_4]Br$ was used instead of $[N(C_3H_7)_4]Br$. A catalyst was forth in Example 1. The activity is listed in the Table and was 134 × $10^{16}$.

Example 8

Example 2 was repeated, but $NiCl_2 \cdot 6H_2O$ was used instead of $CoCl_2 \cdot 6H_2O$ which formed the catalyst precursor $[N(C_2H_5)_4]_2[Ni(WS_4)_2]$. The catalyst formed in-situ from this precursor had an activity of 169 × $10^{16}$ and is set forth in the table.

Example 9

Example 5 was repeated using $[N(C_3H_7)_4]Br$ instead of $[N(C_2H_5)_4]Br$ to form the catalyst precursor $[N(C_3H_7)_4]_2[Ni(WS_4)_2]$. The activity of the resulting catalyst is listed in the Table and was 164 × $10^{16}$.

Example 10

A $[N(C_2H_5)_4]_2Fe(WS_4)_2]$ catalyst precursor was prepared using the method described by Muller et al [A. Muller and S. Sarker, Angew. Chem. Int'l., Ed. Engl., *76* (19), 705 (1977)]. Thus, 1.44 g of $FeSO_4 \cdot 7H_2O$ and 0.136 g of $N_2H_4 \cdot HCl$ were dissolved in 50 ml of degassed water to which was added a degassed solution of 4.59 g of $[N(C_2H_5)_4]_2WS_4$ in 50 ml of water. The precursor precipitated out of solution as a dark green precipitate which was filtered under argon, washed with water, ethanol and ether and then dried. This yielded 2.6 g of catalyst precursor.

A catalyst was formed in-situ from the precursor and tested using the procedure in Example 1. The activity of the catalyst was 55 × $10^{16}$ and is listed in the Table.

Example 11

In this Example, a $[N(C_3H_7)_4]_3(Fe(MoS_4)_2]$ catalyst precursor was formed under nitrogen by first dissolving 21.0 g of $(NH_4)_2MoS_4$ and 44.8 g of $[N(C_3H_7)_4]Br$ in a mixture of 500 ml of $H_2O$ and 200 ml of $CH_3CN$. To this solution was added, with stirring, suspension of 15 g of $Fe(NH_4)_2SO_4$ in a mixture of 150 ml of $H_2O$ and 100 ml of $CH_3CN$. At first a brown precipitate formed. However, by the time that all of the suspension was added, a black tar and a purplish red suspension had formed. On standing overnight the black tar had solidified into a dark mass which was broken up in the suspension and stirred for a day to obtain a dark purplish precipitate. This precipitate was the catalyst precursor and was filtered, washed twice with water, washed with ethanol and dried under vacuum.

The procedure set forth in Example 1 was used both to form the catalyst from the precursor in-situ in the feed and evaluate the resulting caalyst. The resulting catalyst had an activity of 60 × $10^{16}$ which is set forth in the Table.

Example 12

This experiment used the same catalyst precursor feed and procedure, etc. as Example 1 to evaluate the catalyst. However, this experiment was different than Examples 1—8 in that the catalyst was not formed from the precursor in-situ in the feed solution, but was pre-formed in an $H_2S/H$ mixture prior to contracting the hot, sulfur bearing hydrocarbon feed. Thus, a catalyst was formed by contacting a precursor, $[N(C_2H_5)_4]_3[Co(MoS_4)_2]$ with a flowing mixture of 15% $H_2S$ in $H_2$ for one hour at 325°C. The activity of the catalyst was found to be 255 × $10^{16}$.

Referring to the Table, it can be seen that when a catalyst was formed from the same precursor in-situ in the sulfur bearing feed, the HDS activity of the resulting catalyst was about twice that of a catalyst formed in an $H_2S/H_2$ mixture.

TABLE 4

HDS Activity of Thioheteroanion Derived Catalysts[1]

| Example No. | Precursor | % MS2 | Activity × $10^{-16}$/gm Precursor 3 | Activity × $10^{-16}$/gm MS 2[3] |
|---|---|---|---|---|
| 4 | $[N(C^2H^5)^4]^3Co(MoS^4)^2$ | 35.7 | 167 | 468 |
| 5 | $[N(C^2H^5)^4]^3Co(WS^4)^2$ | 52.6 | 88 | 167 |
| 6 | $[N(C_3H_7)_4]Ni(MoS_4)_2$ | 36.4 | 87 | 239 |
| 7 | $[N(C_2H_5)_4]_2Ni(MoS_4)_2$ | 41.8 | 56 | 134 |
| 8 | $[N(C_2H_5)_4]_2Ni(WS_4)_2$ | 52.6 | 89 | 169 |
| 9 | $[N(C_3H_7)_4]_2Ni(WS_4)_2$ | 46.9 | 77 | 164 |
| 10 | $[N(C_2H_5)_4]_2Fe(WSd_4)_2$ | 52.7 | 29 | 55 |
| 11 | $[N(C_3H_7)_4]_3Fe(MoS_4)_2$ | 30.1 | 18 | 60 |
| 12 | $[N(C_2H_5)_4]_3Co(MoS_4)_2$ | 63 | 161 | 255 |

Footnotes:

1. All catalysts were formed in-situ except for Example 12.
2. Amount of $MS_2$ (M is Mo or W) contained in the precursor in percent.
3. The activity is in molecules of DBT converted per sec per gm. precursor or $MS_2$.

Example 13

In this experiment a sample of the $[N(C_3H_7)_4]_2$—$[NI(MoS_4)_2]$ catalyst precursor prepared in Example 6 was ground and pelletized to a 20/40 mesh size (Tyler) using a four percent aqueous solution of polyvinyl alcohol as a binder. The pelletized catalyst precursor was placed into a stainless steel rector at 100°C at atmospheric pressure where it was purged for one hour under nitrogen. Ten percent of hydrogen sulfide in hydrogen was introduced into the reactor at a space velocity of 0.75 SCF/hr (21.2 l/h) for each 10cc of catalyst precursor in the reactor. The temperature in the reactor was then raised to 325°C and kept at this temperature for three hours to form the catalyst after which the temperature in the reactor was lowered to 100°C, the $H_2S/H_2$ gas flow was stopped and the reactor was purged with nitrogen until room temperature was reached.

About 20cc of each catalyst was loaded into a fixed-bed reactor made out of $\frac{3}{8}$ inch (9.5 mm) 316 stainless steel pipe which was equipped with a calibrated feed burette pump, gas-liquid separator and liquid product collector. The conditions in the reactor were as set forth below:

| | |
|---|---|
| Temperature | 325°C |
| Pressure | 3.15 MPa |
| Hydrogen rate | 3000 SCF/bbl (534.4 $lH_2$/l feed) |
| LHSV | 3.0 |

The liquid product was analyzed for total sulfur by X-ray fluorescence and for nitrogen by combustion analysis. The feedstock used was a light catalytic cycle oil (LCCO) that was about 20 wt.% paraffinic having properties set forth in Table 2.

TABLE 2

LCCO Feed

| | |
|---|---|
| Gravity (°API) | 18.6 |
| Sulfur, wt. % | 1.5 |
| Nitrogen, ppm | 370 |

GC distillation

| Wt. % | Temp., °C |
|---|---|
| 5 | 231 |
| 10 | 251 |
| 50 | 293 |
| 70 | 321 |
| 90 | 352 |
| 95 | 364 |

This catalyst was found to have an HDS rate constant ($K_{HDS}$) of 8.9 and an HDN ($K_{HDN}$) rate constant of 4.4. The rate constants for the hydrodesulfurization and hydrodenitrogenation reactions were calculated as follows:

$$K_{HDS} = \frac{LHSV}{S_f}\left(\frac{S_f}{S_p} - 1\right)$$

$$K_{HDN} = \left(LHSV\right) \ln\left(\frac{N_f}{N_p}\right)$$

wherein $S_f$ and $S_p$ are the weight percent of sulfur in the feed and product, respectively and $N_f$ and $N_p$ are the weight percent of nitrogen in the feed and product, respectively. It should be noted that the catalyst of this invention had a much higher selectivity for nitrogen removal than commercial cobalt molybdate on alumina and nickel molybdate on alumina catalysts.

**Claims**

1. A catalyst formed by heating one or more carbon-containing, bis (tetrathiometallate) catalyst precursor salts selected from $(NR_4)_2[M(WS_4)_2]$, $(NR_4)_x[M(MoS_4)_2]$ and mixtures thereof, in a non-oxidizing atmosphere in the presence of sulphur and hydrogen at a temperature above about 150°C for a time sufficient to form said catalyst, wherein $(NR_4)$ is a carbon-containing, substituted ammonium cation and R is selected from (a) alkyl groups, aryl groups or a mixture thereof and (b) mixtures of (a) with hydrogen, wherein M is a promoter metal which is covalently bound in the anion and is Ni, Co or Fe and wherein x is 2 if M is Ni and x is 3 if M is Co or Fe.

2. A catalyst according to claim 1 wherein promoter metal M is tetra-coordinated with four sulphur atoms with each of the two tetrathiometallate groups providing two of the said four sulphur atoms.

3. A supported catalyst according to claim 1 or claim 2 obtained by heating a porous, refractory inorganic oxide with one or more of the said carbon-containing, bis (tetrathiometallate) precusor salts in a non-oxidizing atmosphere in the presence of sulphur and hydrogen at a temperature above about 150°C for a time sufficient to form said supported catalyst.

4. A supported catalyst according to claim 3, wherein said porous, refractory inorganic oxide support comprises alumina.

5. A catalyst according to any one of the preceding claims which is formed in the presence of excess sulphur.

6. A catalyst according to any one of the preceding claims which is formed in the presence of a hydrocarbon.

7. A process for hydroprocessing a hydrocarbon feed which comprises contacting said feed at a temperature of at least about 100°C and in the presence of hydrogen with a catalyst according to any one of the preceding claims.

8. A process for removing nitrogen from a nitrogen-containing hydrocarbon feed which comprises contacting said feed with a catalyst according to any one of claims 1 to 6 at a temperature of at least about 100°C and in the presence of hydrogen for a time sufficient to remove at least a portion of nitrogen from said feed to produce a feed of reduced nitrogen content.

9. A process according to claim 8 wherein said feed comprises a lube oil feedstock.

10. A process for upgrading feed which comprises contacting said feed at a temperature of at least about 100°C and in the presence of hydrogen with a catalyst according to any one of claims 1 to 6, said contacting occurring for a time sufficient to upgrade at least a portion of said feed.

**Patentansprüche**

1. Katalysator hergestellt durch Erhitzen eines oder mehrerer kohlenstoffhaltiger Bis-(tetrathiometallat)-Katalysatorvorläufersalze ausgewählt aus $(NR_4)_2[M(WS_4)_2]$, $(NR_4)_x[M(Mos_4)_2]$ und Mischungen derselben in einer nicht oxidierenden Atmosphäre in Gegenwart von Schwefel und Wasserstoff auf eine Temperatur oberhalb etwa 150°C über einen für die Bildung des Katalysators ausreichenden Zeitraum, wobei $(NR_4)$ ein kohlenstoffhaltiges substituiertes Ammoniumkation ist und R ausgewählt ist aus (a) Alkylgruppen, Arylgruppen oder Mischungen derselben und (b) Mischungen aus (a) mit Wasserstoff, wobei M ein Promotermetall, das in dem Anion kovalent gebunden ist, und zwar Ni, Co oder Fe ist und wobei x 2 ist, wenn M Ni ist, und x 3 ist, wenn M Co oder Fe ist.

2. Katalysator nach Anspruch 1, dadurch gekennzeichnet, daß das Promotermetall M mit vier Schwefelatomen tetrakoordiniert ist, wobei jeweils zwei der Tetrathiometallatgruppen zwei der vier Schwefelatome liefern.

3. Trägerkatalysator nach Anspruch 1 oder 2 erhalten durch Erhitzen eines porösen feuerfesten

anorganischen Oxids mit einem oder mehreren der kohlenstoffhaltigen Bis-(tetrathiometallat)-Vorläufersalze in einer nicht oxidierenden Atmosphäre in Gegenwart von Schwefel und Wasserstoff auf eine Temperatur von oberhalb etwa 150°C über einen für die Bildung des Trägerkatalysators ausreichenden Zeitraum.

4. Trägerkatalysator nach Anspruch 3, dadurch gekennzeichnet, daß der poröse, feuerfeste anorganische Oxidträger Aluminiumoxid umfaßt.

5. Katalysator nach einem der vorangehenden Ansprüche, dadurch gekennzeichnet, daß er in Gegenwart eines Überschusses an Schwefel gebildet worden ist.

6. Katalysator nach einem der vorangehenden Ansprüche, dadurch gekennzeichnet, daß er in Gegenwart eines Kohlenwasserstoffs gebildet worden ist.

7. Verfahren zur Behandlung eines Kohlenwasserstoffeinsatzmaterials mit Wasserstoff, dadurch gekennzeichnet, daß das Einsatzmaterial bei einer Temperatur von mindestens etwa 100°C und in Gegenwart von Wasserstoff mit einem Katalysator gemäß einem der vorangehenden Ansprüche kontaktiert wird.

8. Verfahren zur Entfernung von Stickstoff aus einem stickstoffhaltigen Kohlenwasserstoffeinsatzmaterial, dadurch gekennzeichnet, daß das Einsatzmaterial mit einem Katalysator gemäß einem der Ansprüche 1 bis 6 bei einer Temperatur von mindestens etwa 100°C und in Gegenwart von Wasserstoff ausreichend lange kontaktiert wird, um mindestens einen Teil des Stickstoffs aus dem Einsatzmaterial unter Erzeugung eines Einsatzmaterials mit verringertem Stickstoffgehalt zu entfernen.

9. Verfahren nach Anspruch 8, dadurch gekennzeichnet, daß das Einsatzmaterial ein Schmieröleinsatzmaterial umfaßt.

10. Verfahren zur Veredelung eines Einsatzmaterials, dadurch gekennzeichnet, daß das Einsatzmaterial bei einer Temperatur von mindestens etwa 100°C und in Gegenwart von Wasserstoff mit einem Katalysator gemäß einem der Ansprüche 1 bis 6 kontaktiert wird, wobei das Kontaktieren ausreichend lange erfolgt, um mindestes einen Teil des Einsatzmaterials zu verbessern.

**Revendications**

1. Catalyseur formé par chauffage d'un ou de plusieurs sels précurseur de catalyseur qui sont des bis (tétrathiométallate) contenant du carbone choisi parmi $(NR_4)_2[M(WS_4)_2]$, $(NR_4)_x[M(Mos_4)_2]$, et les mélanges de ceux-ci, en atmosphère non-oxydante en présence de soufre et d'hydrogène à une température supérieure à environ 150°C pendant un temps suffisant pour former le catalyseur, $(NR_4)$ étant un cation ammonium substitué contenant du carbone et R étant choisi parmi (a) les groupes alkyles, les groupes aryles ou un mélange de ceux-ci et (b) des mélanges de (a) avec l'hydrogène, M étant un métal promoteur lié par covalence dans l'anion et étant Ni, Co ou Fe, x étant égal à 2 si M est Ni et x étant égal à 3 si M est Co ou Fe.

2. Catalyseur selon la revendication 1, dans lequel le métal promoteur M est tétra-coordiné par quatre atomes de soufre avec chacun des deux groupes tétrathiométallate fournissant deux des quatre atomes de soufre.

3. Catalyseur fixé sur un support selon la revendication 1 ou la revendication 2 obtenu par chauffage de l'oxyde minéral réfractaire poreux avec un ou plusieurs des dits sels précurseurs bis (tétrathiométallate) contenant du carbone dans une atmosphère non-oxydante en présence de soufre et d'hydrogène à une température supérieure à environ 150°C pendant un temps suffisant pour former le catalyseur sur le support.

4. Catalyseur fixé sur un support selon la revendication 3, le support d'oxyde minéral réfractaire poreux comprenant de l'alumine.

5. Catalyseur selon l'une quelconque des revendications précédentes formé en présence d'un excès de soufre.

6. Catalyseur selon l'une quelconque des revendications précédentes formé en présence d'un hydrocarbure.

7. Procédé d'hydrotraitement d'une alimentation d'hydrocarbures qui comprend la mise en contract de cette alimentation à une température d'au moins 100°C environ et en présence d'hydrogène avec un catalyseur selon l'une quelconque des revendications précédentes.

8. Procédé pour éliminer l'azote d'une alimentation d'hydrocarbures contenant de l'azote qui comprend la mise en contact de cette alimentation avec un catalyseur selon l'une quelconque des revendications 1 à 6 à une température d'au moins 100°C environ et en présence d'un hydrogène pendant un temps suffisant pour éliminer au moins une partie de l'azote de cette alimentation pour produire une alimentation de teneur en azote réduite.

9. Procédé selon la revendication 8 dans lequel cette alimentation comprend une charge d'huile lubrifiante.

10. Procédé pour valoriser une alimentation qui comprend la mise en contact de cette alimentation à une température d'au moins environ 100°C et en présence d'hydrogène avec un catalyseur selon l'une quelconque des revendications 1 à 6, cette mise en contact se produisant pendant un temps suffisant pour valoriser au moins une portion de l'alimentation.